(19) Europäisches Patentamt
European Patent Office
Office européen des brevets

(11) **EP 2 769 208 B1**

(12) **FASCICULE DE BREVET EUROPEEN**

(45) Date de publication et mention
de la délivrance du brevet:
**13.09.2017 Bulletin 2017/37**

(21) Numéro de dépôt: **11824334.4**

(22) Date de dépôt: **21.10.2011**

(51) Int Cl.:
*G01N 23/20* (2006.01)          *G01N 23/203* (2006.01)
*G01V 5/00* (2006.01)

(86) Numéro de dépôt international:
**PCT/FR2011/000568**

(87) Numéro de publication internationale:
**WO 2013/057381 (25.04.2013 Gazette 2013/17)**

(54) **PROCÉDÉ DE CARACTÉRISATION D'UN MATÉRIAU**

VERFAHREN ZUR CHARAKTERISIERUNG EINES MATERIALS

METHOD FOR CHARACTERIZING A MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**27.08.2014 Bulletin 2014/35**

(73) Titulaire: **Commissariat à l'Énergie Atomique
et aux Énergies Alternatives
75015 Paris (FR)**

(72) Inventeurs:
• **PAULUS, Caroline
F-38000 Grenoble (FR)**
• **TABARY, Joachim
F-38100 Grenoble (FR)**

(74) Mandataire: **Ahner, Philippe et al
BREVALEX
95, rue d'Amsterdam
75378 Paris Cedex 8 (FR)**

(56) Documents cités:
**WO-A1-2011/009833          WO-A1-2011/069748
US-B1- 6 459 764          US-B2- 7 561 666**

• **ANNE-SOPHIE LALLEMAN ET AL: "A dual X-ray
backscatter system for detecting explosives:
Image and discrimination of a suspicious
content", NUCLEAR SCIENCE SYMPOSIUM AND
MEDICAL IMAGING CONFERENCE (NSS/MIC),
2011 IEEE, IEEE, 23 octobre 2011 (2011-10-23),
pages 299-304, XP032117513, DOI:
10.1109/NSSMIC.2011.6154503 ISBN:
978-1-4673-0118-3**

**Description**

**DOMAINE TECHNIQUE**

La présente invention concerne un procédé non destructif de caractérisation d'un matériau et s'applique particulièrement à des matériaux composés d'éléments chimiques légers.

**ÉTAT DE LA TECHNIQUE ANTÉRIEURE**

Des dispositifs de caractérisation de matériaux exploitent l'absorption du rayonnement X transmis à travers des objets à examiner, afin d'identifer les matériaux les constituant. Ces dispositifs sont cependant mal adaptés à des objets volumineux ou denses.

D'autres dispositifs sont basés sur la rétrodiffusion. Cette technologie ne requiert l'accès qu'à un seul côté de l'objet suspect à inspecter. Dans ce cas la source de photons X et le détecteur se trouvent du même côté de l'objet. Les photons X vont diffuser dans l'objet plus que le traverser.

Cette technique devient un bon outil d'inspection pour la détection et l'identification de matériaux dont les atomes qui les constituent possèdent des numéros atomiques faibles, par exemple inférieurs à 10. Ces matériaux sont constitués de carbone, d'oxygène, d'hydrogène, d'azote, voire de fluor. Dans ce cas, le phénomène de diffusion par effet Compton est prépondérant par rapport au phénomène d'absorption par effet photoélectrique aux énergies classiquement utilisées, comprises entre environ 50 et 200 keV.

Le procédé décrit dans la demande de brevet WO 2011/009833, considérée par le demandeur comme un art antérieur proche, est une première approche permettant d'identifier des matériaux par des mesures non destructives, en réalisant un spectre du rayonnement rétrodiffusé. Cette méthode permet une estimation de la densité du matériau, à partir d'estimations d'un coefficient $\mu'(E)$, dit coefficient combiné d'atténuation, à différentes énergies. Cette méthode permet également de déterminer le ratio Zeff/A, Zeff étant une grandeur caractérisant le matériau examiné, dite numéro atomique effectif et A étant désignée comme la masse molaire normalisée du matériau. La présente demande de brevet porte sur une alternative au procédé décrit dans cette demande de brevet antérieure.

**EXPOSÉ DE L'INVENTION**

La présente invention a pour but de proposer un procédé de caractérisation d'un matériau dont est composé un objet, ce matériau étant un corps pur ou un mélange de corps purs, ainsi qu'un dispositif de caractérisation du matériau, ce procédé et ce dispositif ne présentant pas les limitations et difficultés ci-dessus.

D'une façon générale, l'invention permet la détection et l'identification de matériaux dont les atomes possèdent des numéros atomiques faibles, par exemple inférieurs à 10. Il s'agit par exemple de matériaux constitués de carbone, d'oxygène, d'hydrogène, d'azote voire de fluor.

Un but de l'invention est de proposer un procédé de caractérisation fiable d'objets comportant des éléments légers et par exemple des matériaux organiques.

Cette caractérisation peut se faire quelle que soit la nature de l'objet et la position des matériaux dans l'objet.

Un autre but de l'invention est de proposer un procédé permettant de pouvoir aisément distinguer de l'eau par rapport à d'autres liquides comportant par exemple des matériaux organiques.

Pour y parvenir, la présente invention propose d'exploiter la signature spectrale diffusée par un objet, irradié par un faisceau de photons ionisants incident, cette signature spectrale étant délivrée par un détecteur.

Plus précisément l'invention est un procédé de caractérisation d'un matériau comportant les étapes suivantes :

a°) disposer un objet en le matériau à caractériser, une source de photons ionisants collimatée ayant un axe de collimation et un détecteur spectrométrique collimaté ayant un axe de collimation, de façon que les deux axes de collimation soient sécants dans le matériau de l'objet et définissent une profondeur de diffusion dans le matériau de l'objet et un angle de diffusion non nul,

b°) irradier l'objet avec des photons ionisants générés par la source et acquérir, au moyen du détecteur, un premier spectre en énergie correspondant à une diffusion d'un premier flux de photons ionisants à une première profondeur de diffusion selon ledit angle de diffusion et un deuxième spectre en énergie correspondant à une diffusion d'un second flux de photons ionisants à une seconde profondeur de diffusion selon ledit angle de diffusion, les photons ionisants parcourant dans le matériau des trajets avant et après la diffusion tels que le rapport des trajets avant et après la diffusion, appelé facteur d'asymétrie, soit sensiblement constant d'une acquisition à l'autre,

c°) déterminer une fonction combinée d'atténuation linéique à partir des deux spectres en énergie après diffusion et de la différence de trajets parcourus par les photons ionisants avant ou après diffusion d'une acquisition à l'autre,

d°) sélectionner dans cette fonction combinée d'atténuation linéique plusieurs plages d'énergie,

e°) calculer dans chaque plage d'énergie une grandeur représentative de la fonction combinée d'atténuation linéique,

f°) estimer à partir d'au moins deux de ces grandeurs, au moins une caractéristique physique du matériau à caractériser, par une comparaison avec des même grandeurs obtenues à partir de matériaux connus.

Cette comparaison peut être réalisée en utilisant une relation existant entre les mêmes grandeurs de matériaux connus, dits matériaux étalons, et la caractéristique physique connue desdits matériaux étalons, cette relation pouvant être pouvant être établie expérimentalement, par calcul, par simulation.

Avantageusement, dans un souci de précision, à l'étape e°) la grandeur représentative de la fonction combinée d'atténuation linéique est un indicateur statistique tel une moyenne ou une intégrale.

Dans un souci de simplification, le facteur d'asymétrie peut être sensiblement égal à un.

Lors de la sélection des deux plages d'énergie, l'une dite basse comporte au moins une énergie inférieure à celles de l'autre plage dite haute, la caractéristique physique du matériau à caractériser estimée à l'étape f°) étant alors son numéro atomique ou son numéro atomique effectif massique selon que le matériau à caractériser est un corps pur ou un mélange.

Il est préférable qu'à l'étape f°) on réalise un rapport entre les dites deux grandeurs.

La plage basse est avantageusement comprise entre environ 20 et 50 keV et la plage haute entre environ 50 et 150 keV.

En outre, on peut à l'étape d°) sélectionner une troisième plage d'énergie, celle-ci comportant au moins une énergie supérieure à celles de la plage basse, à l'étape f°) la caractéristique du matériau à caractériser étant alors sa masse volumique.

Avantageusement la troisième plage d'énergie est comprise entre environ 50 et 150 keV.

Lorsque à l'étape f°) on estime au moins deux caractéristiques physiques du matériau à caractériser, le procédé peut comporter en outre une étape d'identification du matériau à caractériser consistant à :

- disposer pour des matériaux connus d'intérêt, des mêmes caractéristiques physiques,
- comparer les caractéristiques physiques du matériau à caractériser avec celles des matériaux connus d'intérêt, le matériau étant le matériau d'intérêt connu qui satisfait au mieux la comparaison.

La comparaison s'effectue de préférence selon un critère de proximité géométrique ou un critère probabiliste.

La présente invention concerne également un dispositif de caractérisation d'un matériau comportant :

- une source de photons ionisants collimatée ayant un axe de collimation, destinée à irradier un objet du matériau à caractériser avec des photons ionisants incidents,
- un détecteur spectrométrique collimaté ayant un axe de collimation, la source et le détecteur étant collimatés de telle sorte que leurs axes de collimation forment un angle de diffusion non nul, et soient sécants dans le matériau à caractériser à une profondeur de diffusion, le détecteur comprenant des moyens aptes à produire un spectre en énergie d'un flux de photons ionisants qu'il détecte,
- des moyens de déplacement de la source et/ou du détecteur et/ou de l'objet de telle sorte que l'intersection de l'axe de collimation de la source et du détecteur puisse varier entre deux profondeurs de diffusion différentes dans le matériau à caractériser,
- des moyens de détermination d'une fonction combinée d'atténuation linéique à partir d'un premier spectre en énergie correspondant à une diffusion d'un premier flux de photons ionisants à une première profondeur de diffusion selon ledit angle de diffusion et d'un second spectre en énergie correspondant à une diffusion d'un second flux de photons ionisants à une secone profondeur de diffusion selon ledit angle de diffusion, et à partir des positions de la source et du détecteur par rapport au matériau à caractériser, ces premier et second flux de photons ionisants diffusés étant détectés par le détecteur,
- des moyens de sélection dans cette fonction combinée d'atténuation linéique de plusieurs plages d'énergie,
- des moyens de calcul, dans chaque plage d'énergie, d'une grandeur représentative de la fonction combinée d'atténuation linéique,
- des moyens d'estimation, à partir d'au moins deux de ces grandeurs, d'au moins une caractéristique physique du matériau à caractériser, par une comparaison avec des mêmes grandeurs obtenues à partir de matériaux connus.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

La figure 1 représente un dispositif de caractérisation d'un matériau objet de l'invention ;

La figure 2 illustre le spectre en énergie du flux de photons ionisants diffusé acquis par le détecteur spectrométrique lors de mesures, le volume de diffusion se trouvant à deux profondeurs différentes dans l'objet ;

La figure 3 illustre, sur un même graphique, la fonction d'atténuation linéaire et la fonction combinée d'atténuation linéique en fonction de l'énergie diffusée pondérée par un facteur 0,5, cette figure a été obtenue par calcul en considérant un angle de rétrodiffusion de 120° ;

Les figures 4 et 5 montrent les variations de la fonction d'atténuation massique combinée $\sigma'$ (E) en fonction de l'énergie $E_1$ diffusée, la variation de la fonction combinée d'atténuation linéique $\mu'$ (E) en fonction de l'énergie $E_1$ diffusée pour un certain nombre de matériaux usuels, ces figures ont été obtenues par calcul en considérant un angle de rétrodiffusion de 120° ;

La figure 6 montre la variation de la fonction d'atténuation massique en fonction de l'énergie pour un certain nombre de corps purs ;

La figure 7 montre la sélection des plages d'énergie dans la représentation de la fonction combinée d'atténuation linéique en fonction de l'énergie diffusée ;

Les figures 8 et 9 montrent la relation existant, pour des corps purs respectivement des mélanges, entre leur numéro atomique Z respectivement leur numéro atomique effectif massique $Z_{eff-m}$ et la valeur du rapport $\mu'_{mean}$(HE.1)/$\mu'_{mean}$(BE) ;

La figure 10 montre la relation existant, pour des matériaux étalons usuels, entre $\mu'_{mean}$(HE.2) et leur masse volumique ;

La figure 11 montre un espace à deux dimensions $Z_{eff-m}$ ($\rho$) contenant des ensembles de couples $Z_{eff-m}/\rho$ pour des matériaux d'intérêt connus ;

La figure 12 représente le spectre en énergie du flux de photons ionisants diffusé acquis par le détecteur spectrométrique lors de mesures expérimentales avec en tant qu'objet un échantillon en Kynar, le volume de diffusion se trouvant à deux profondeurs différentes dans l'échantillon ;

La figure 13, illustre, toujours dans le cadre expérimental d'un échantillon en Kynar, la relation entre la fonction combinée d'atténuation linéique et l'énergie diffusée ;

La figure 14, toujours dans le cadre expérimental d'un échantillon en Kynar, illustre l'estimation de sa masse volumique et de son numéro atomique effectif massique, à comparer aux grandeurs équivalentes connues de matériaux d'intérêt connus.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

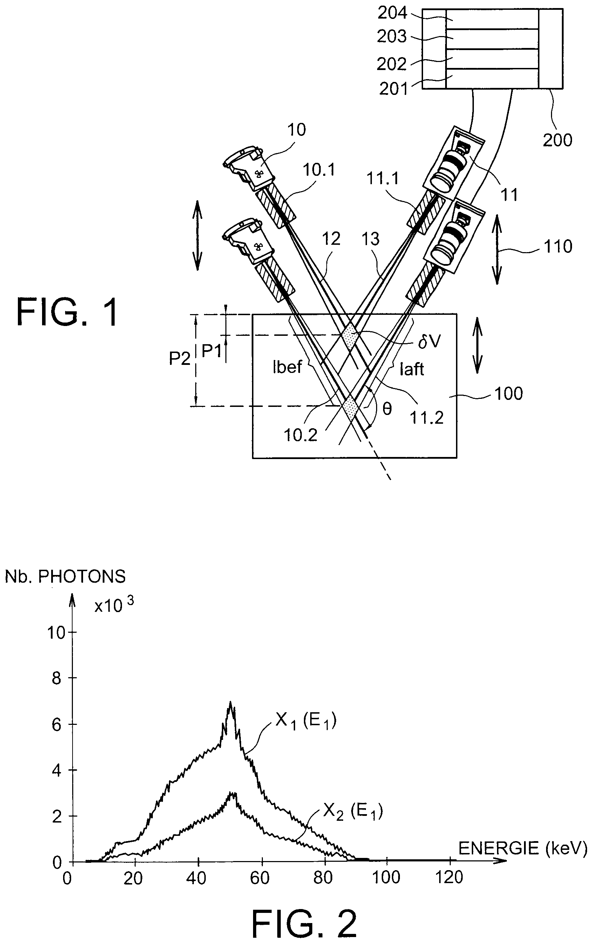

On va se référer aux figures 1 et 2 qui montrent respectivement un dispositif permettant de mettre en oeuvre le procédé de l'invention et une représentation de spectres obtenus lors de l'utilisation du dispositif.

Le dispositif comporte une source de photons ionisants 10 et un détecteur avantageusement spectrométrique 11. On suppose que les énergies utilisées sont celles typiquement délivrées par des photons ionisants, X ou gamma, et qu'elles sont typiquement comprises entre quelques keV et 300 keV environ. On suppose également que dans l'exemple décrit, on utilise au moins un objet 100 en matériau à caractériser et que cet objet 100 est composé d'un seul matériau, ce matériau étant un corps pur ou un mélange de corps purs. On l'a représenté comme un bloc sensiblement rectangulaire. D'autres formes peuvent bien sûr être employées sous réserve que la forme et la position de la surface de l'objet par rapport à la source et au détecteur soient connues.

La source de photons ionisants 10 et le détecteur spectrométrique 11 sont collimatés et possèdent chacun un axe central de collimation et l'angle de collimation est généralement faible, préférentiellement inférieur à environ 10° et plus particulièrement inférieur à 5°. Le collimateur de la source de photons ionisants 10 est référencé 10.1 et le collimateur du détecteur spectrométrique 11 est référencé 11.1. Les axes centraux de collimation sont référencés 10.2 et 11.2 sur la figure 1. La source de photons ionisants 10 est polychromatique, par exemple un tube générateur de rayons X. On pourrait également utiliser une plusieurs sources isotopiques. L'intensité des rayonnements ionisants produits par les tubes générateurs de rayons X étant supérieure à celle des rayonnements produits par les sources isotopiques, les tubes générateurs de rayons X sont préférés.

La source de photons ionisants 10 est destinée à produire un faisceau de photons ionisants incident 12 dont le spectre est une fonction de l'énergie $E_0$.

Le faisceau de photons ionisants incident 12 pénètre dans le matériau de l'objet 100, au niveau d'une zone sensiblement plane, et diffuse dans un volume d'inspection $\delta V$, situé à une profondeur de diffusion donnée. Une atténuation se produit entre l'émission par la source de photons ionisants 10 et le volume d'inspection $\delta V$. Un faisceau de

photons ionisants diffusé 13 est généré et il est détecté par le détecteur spectrométrique 11. Une atténuation se produit entre le volume d'inspection δV et le détecteur spectrométrique 11. Ces faisceaux de photons ionisants incident et diffusé possèdent chacun un axe central. L'axe central du faisceau de photons ionisants incident 12 correspond à l'axe central de collimation 10.2 de la source 10. De même l'axe central du faisceau de photons ionisants diffusé et détecté 13 correspond à l'axe central de collimation 11.2 du détecteur 11.

Le volume d'inspection δV correspond à l'intersection entre le faisceau de photons ionisants incident 12 et le faisceau de photons ionisants diffusé 13 vers le détecteur spectrométrique 11. Du fait de la collimation de la source de photons ionisants 10 et du détecteur spectrométrique 11, les faisceaux de photons ionisants incident et diffusé sont délimités spatialement, et leur intersection dans le matériau à caractériser de l'objet 100 définit un volume d'inspection δV. Ce volume d'inspection δV est relativement faible, typiquement de l'ordre du centimètre cube. Les angles de collimation de la source de photons ionisants 10 et du détecteur spectrométrique 11 seront choisis en conséquence. Le faisceau de photons ionisants incident 12 et le faisceau de photons ionisants diffusé détecté 13 sont séparés par un angle de diffusion θ, comme illustré sur la figure 1. Cet angle de diffusion θ est l'angle compris entre l'axe central du faisceau de rayons ionisants incident 12 et l'axe central de faisceau de rayons ionisants détecté 13, cet angle de diffusion étant nul s' il n'y a pas de diffusion. Le volume d'inspection δV s'étend autour de l'intesection, dans l'objet 100, des axes centraux de collimation de la source de photons ionisants 10 et du détecteur spectrométrique 11.

On va irradier l'objet 100 avec le faisceau de photons ionisants incident 12 de manière à obtenir un volume d'inspection δV à une profondeur de diffusion donnée dans le matériau de l'objet 100 et on va acquérir grâce au détecteur spectrométrique 11 le flux de photons ionisants ayant diffusé, le détecteur spectrométrique 11 réalise donc des acquisitions du flux de photons ionisants ayant diffusé. Ce flux de photons ionisants ayant diffusé, noté X(E1), correspond au nombre de photons ionisants atteignant la surface sensible du détecteur de spectrométrie 11. Comme on le verra plus loin, on fait au moins deux acquisitions consécutives du flux de photons ionisants ayant diffusé. Pour cela, on déplace la source de photons ionisants 10, le détecteur spectrométrique 11 et l'objet 100 relativement les uns par rapport aux autres, de manière à ce que la diffusion se fasse à des profondeurs de diffusion différentes dans le matériau de l'objet. On a représenté des moyens de déplacement de la source et/ou du détecteur et/ou de l'objet les uns par rapport aux autres avec la référence 110. Les deux positions sont illustrées sur la figure 1, les profondeurs de diffusion, mesurées à partir de la surface de l'objet 100 par laquelle le faisceau de photons ionisants incident 12 entre dans l'objet 100 sont référencées respectivement P1 et P2. Le positionnement de la source de photons ionisants 10 et du détecteur spectrométrique 11 d'une acquisition à l'autre sera réalisé en conservant le même angle de diffusion θ. On pourra déplacer la source de photons ionisants 10 et le détecteur spectrométrique 11, par exemple, selon une direction sensiblement perpendiculaire à la surface de l'objet à caractériser, cette surface étant supposée sensiblement plane au moins localement.

Le dispositif de caractérisation du matériau comporte en outre des moyens de traitement 200 des deux spectres en énergie délivrés par le détecteur spectrométrique 11. Ils seront décrits plus en détail ultérieurement.

En se limitant au premier diffusé Compton, le faisceau de photons ionisants incident 12 à l'énergie $E_0$ émis par la source de photons ionisants 10 est soumis à trois processus d'interaction avant d'atteindre le détecteur spectrométrique 11. Le premier est une atténuation dans le matériau à caractériser avant la diffusion dans le volume d'inspection, le second est la diffusion, le troisième étant une atténuation dans le matériau à caractériser après diffusion.

Lors de la réalisation des deux acquisitions, on s'assure que le rapport entre les longueurs des trajets parcouru par les photons ionisants dans le matériau à caractériser avant la diffusion et après la diffusion reste sensiblement constant d'une acquisition à l'autre. On appelle $l_{bef}$ la longueur du trajet parcouru par les photons ionisants dans le matériau à caractériser avant la diffusion. On appelle $l_{aft}$ la longueur du trajet parcouru par les photons ionisants dans le matériau à caractériser après la diffusion. On appelle facteur d'asymétrie ε le rapport $\ell_{bef}/\ell_{aft}$. On aurait très bien pu s'intéresser à un autre facteur d'asymétrie ε' correspondant au rapport $\ell_{aft}/\ell_{bef}$ et valant donc 1/ε. On s'arrange en positionnant la source de photons ionisants 10, le détecteur spectrométrique 11 et l'échantillon 100, lors des deux acquisitions, que ce facteur d'asymétrie ε reste sensiblement constant.

Le flux de photons ionisants X(E1) ayant diffusé dans le volume d'inspection δV et ayant atteint la face avant sensible du détecteur spectrométrique 11 peut s'écrire avec la formule (1), on suppose alors que le matériau est un mélange de corps purs :

$$X(E_1) = \Phi(E_0).e^{-\mu(E_0, Z).\ell_{bef}} \left[ \frac{d\sigma_{KN}(E_0, \theta)}{d\Omega} \delta\omega \frac{N_a.S(E_0, \theta, Z_{eff-a}).\rho}{A_{norm}}.\delta V \right] e^{-\mu(E_1, Z).\ell_{aft}}$$

(1)

dans laquelle :

- $\Phi(E_0)$ est le débit de fluence des photons ionisants produits par la source ;

- $E_1 = \dfrac{E_0}{1 + \alpha(1 - \cos\theta)}$ est l'énergie diffusée des photons ionisants détectés par le détecteur spectrométrique après la diffusion selon l'angle de diffusion $\theta$, avec $\alpha = E_0/m_e c^2$, $m_e$ étant la masse de l'électron au repos soit 9,1093097x10$^{-31}$kg et c la célérité de la lumière dans le vide soit 299792458 m/s, les photons ionisants du faisceau de photons ionisants incident 12 avant diffusion possédant l'énergie $E_0$ ;

- $\mu(E_0, Z)$ et $\mu(E_1, Z)$ sont des fonctions d'atténuation linéaire du matériau avant et après la diffusion aux énergies respectives $E_0$ et $E_1$ ;

- $\dfrac{d\sigma_{KN}(E_0, \theta)}{d\Omega}$ est la section efficace différentielle de diffusion par électron par effet Compton donnée par la formule de Klein-Nishina ;

- $\delta\omega$ est l'angle solide sous lequel est vu le détecteur spectrométrique depuis chaque point du volume d'inspection $\delta V$, cet angle solide n'est pas illustré pour ne pas surcharger la figure 1 ;

- $N_a$ est le nombre d'Avogadro ;

- $A_{norm}$ est la masse molaire normalisée du matériau à caractériser et est définie par $A_{norm} = \sum_i \alpha_i^{at} A_i$   $\alpha_i^{at}$ sont les pourcentages atomiques de chaque élément chimique constituant le matériau à caractériser, chaque $\alpha_i^{at}$ est défini à partir du pourcentage en masse $\omega_i$ et de la masse atomique $A_i$ de l'élément chimique i :

$$\alpha_i^{at} = \frac{\dfrac{\omega_i}{A_i}}{\displaystyle\sum_{i=1}^{n} \frac{\omega_i}{A_i}} \quad ;$$

- $Z_{eff-a}$ est le numéro atomique effectif du matériau à caractériser, ce matériau étant un mélange, il est de même nature que le numéro atomique pour un corps pur. Il s'exprime par $Z_{eff-a} = \displaystyle\sum_{i=1}^{n} \alpha_i^{at} Z_i \quad ;$

- $S(E_0, \theta, Z_{eff-a})$ est une fonction de diffusion incohérente, elle tend vers $Z_{eff-a}$ lorsque $E_0$ augmente ;

- $\rho$ est la masse volumique du matériau à caractériser ;

Dans la suite de la demande, on utilisera également la grandeur $Z_{eff-m}$ qui correspond au numéro atomique effectif massique du matériau à caractériser, ce matériau étant un mélange. Il est de même nature que le numéro atomique pour un corps pur. Il s'exprime par $Z_{eff-m} = \displaystyle\sum_{i=1}^{n} \omega_i Z_i$ , $\omega_i$ est le pourcentage en masse de l'atome i dans le matériau.

Si le matériau à caractériser est un corps pur, la formule (1) comportera à la place de $Z_{eff-a}$ et $A_{norm}$ respectivement Z et A soit le numéro atomique et la masse molaire du corps pur. Dans ce cas, on a également $Z_{eff-m}$ égal à Z.

Lors d'une acquisition avec un volume d'inspection donné, à une profondeur de diffusion donnée, le détecteur spectrométrique délivre donc un signal $X(E_1)$ qui est le spectre en énergie du flux diffusé dans le volume inspecté $\delta V$ selon l'angle de diffusion $\theta$. Le détecteur 11 comporte des moyens 11.3 pour délivrer de tels spectres en énergie. La figure 2 illustre le spectre en énergie du flux de photons ionisants ayant diffusé dans le volume d'inspection $\delta V$ et ayant atteint la face avant sensible du détecteur spectrométrique, pour deux positions du volume d'inspection à des profondeurs de diffusion P1, P2 différentes dans le matériau à caractériser, en conservant un angle de diffusion $\theta$ constant dans les deux positions. Ce flux correspond, au nombre de photons ionisants, ayant une énergie donnée, détectés par le détecteur spectrométrique. Le flux de photons ionisants atteignant la face avant sensible du détecteur spectrométrique lorsque le volume de diffusion est à la profondeur de diffusion P1 est appelé premier flux de photons ionisants et noté $X_1(E_1)$ et le flux de photons ionisants atteignant la face avant sensible du détecteur spectrométrique lorsque le volume de diffusion est à la profondeur de diffusion P2 est appelé second flux de photons ionisants et noté $X2(E_1)$.

En rassemblant dans la formule (1) tous les termes indépendants du matériau en un seul coefficient noté $k(E_1)$, on simplifie la formule (1) qui devient la formule (1') :

$$X(E_1) = k(E_1) . \frac{\rho . S(E_0, \theta, Z_{eff-a})}{A_{norm}} e^{-\mu'(E_1, \varepsilon) . \ell_{aft}} \qquad (1')$$

On appelle fonction combinée d'atténuation linéique le terme $\mu'$ ($E_1$, $\varepsilon$) que l'on écrira par la suite $\mu'$ ($E_1$). C'est la somme de la fonction d'atténuation linéaire à l'énergie incidente $E_0$ avant la diffusion et de la fonction d'atténuation linéaire à l'énergie $E_1$ diffusée après la diffusion, l'une des fonctions d'atténuation étant pondérée par un facteur d'asymétrie. Lorsque la pondération affecte la fonction d'atténuation linéaire à l'énergie incidente $E_0$, on emploie le facteur d'asymétrie $\varepsilon$ et lorsque la pondération affecte la fonction d'atténuation linéaire à l'énergie diffusée $E_1$, on emploie le facteur d'asymétrie $\varepsilon'$. Dans l'exemple décrit la fonction combinée d'atténuation linéique s'exprime par la formule (2) :

$$\mu'(E_1) = \mu(E_1, Z) + \varepsilon . \mu(E_0, Z) \qquad (2)$$

On peut alors calculer directement la fonction combinée d'atténuation linéique $\mu'$ ($E_1$) qui s'exprime par la formule (3):

$$\mu'(E_1) = \frac{1}{\ell_{aft2} - \ell_{aft1}} \ell n\left(\frac{X_1(E_1)}{X_2(E_1)}\right) = \frac{1}{\Delta \ell} \ell n\left(\frac{X_1(E_1)}{X_2(E_1)}\right) \qquad (3)$$

$\ell_{aft1}$ et $\ell_{aft2}$ sont les longueurs du trajet parcouru par les photons ionisants dans le matériau à caractériser, après la diffusion, lors d'une des acquisitions, respectivement lors de l'autre acquisition. Le terme $\Delta \ell$ est appelé différence de marche. Lorsque le facteur d'asymétrie est tel que $\varepsilon = \ell_{bef}/\ell_{aft}$ alors $\Delta \ell = \ell_{aft2} - \ell_{aft1}$.

Dans le cas où le facteur d'asymétrie est défini par $\varepsilon' = \ell_{aft}/\ell_{bef}$, on peut montrer que :

$$\mu'(E_1) = \frac{1}{\ell_{bef2} - \ell_{bef1}} . \ell n\left(\frac{X_1(E_1)}{X_2(E_1)}\right) = \frac{1}{\Delta \ell} \ell n\left(\frac{X_1(E_1)}{X_2(E_1)}\right) \qquad (3')$$

Avec $\mu'$ ($E_1$) = $\varepsilon'$ . $\mu(E_1, Z) + \mu(E_0, Z)$ La différence de marche $\Delta \ell$ est alors telle que $\Delta \ell = \ell_{bef2} - \ell_{bef1}$, $\ell_{bef1}$ et $\ell_{bef2}$ sont les longueurs du trajet parcouru par les photons ionisants dans le matériau à caractériser avant la diffusion lors de l'une des acquisitions, respectivement lors de l'autre acquisition.

Dans le reste de la description, on considère que $\varepsilon = \ell_{bef}/\ell_{aft}$.

Lors de ces deux acquisitions, le déplacement de la source de photons ionisants 10, du détecteur spectrométrique 11 par rapport à l'objet 100 est connu et la différence de marche $\Delta \ell$ également, $\Delta \ell = \ell_{aft2} - \ell_{aft1}$.

Les inventeurs se sont aperçus que le comportement de la fonction combinée d'atténuation linéique $\mu'$ ($E_1$) en fonction de l'énergie $E_1$ diffusée était très proche de celle de la fonction d'atténuation linéaire $\mu(E_1)$ en fonction de l'énergie $E_1$. Dans tous les cas, il existe une bijection entre $\mu'$ ($E_1$) et $\mu(E_1)$.

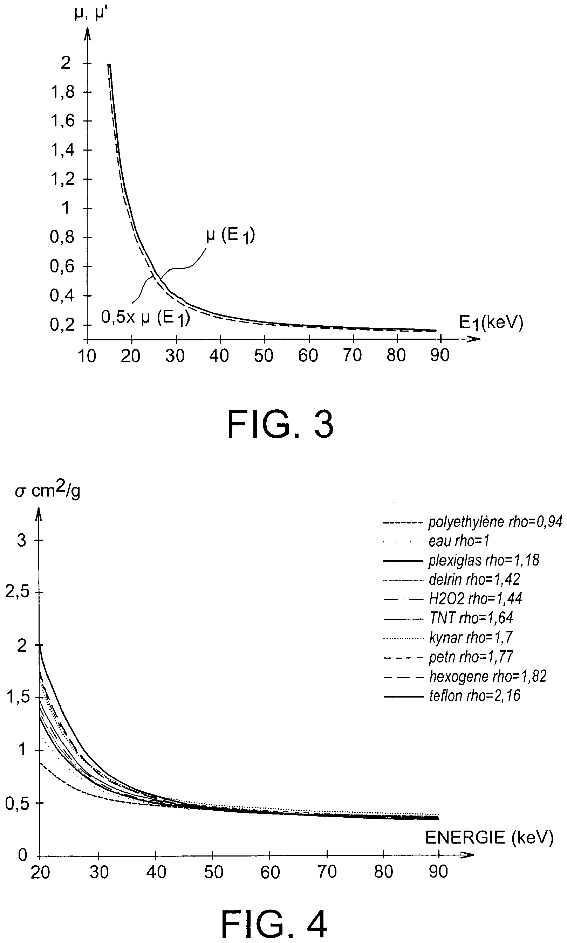

On peut se référer à la figure 3 qui montre la variation de la fonction combinée d'atténuation linéique $\mu'$ ($E_1$), pondérée d'un facteur 0,5, et de la fonction d'atténuation linéaire $\mu(E_1)$ en fonction de l'énergie $E_1$ diffusée dans un cas où l'angle de diffusion $\theta$ vaut 120°. Dans ce cas particulier étudié $\varepsilon$ est égal à un et $\mu(E_1)$ est proche de 0,5.$\mu'$ ($E_1$).

La variation de la fonction combinée d'atténuation linéique $\mu'$ ($E_1$) est telle que pour les énergies élevées, la courbe possède une asymptote horizontale et, pour les énergies basses, une asymptote verticale.

S'il est possible d'extraire au moins une caractéristique physique du matériau à caractériser à partir de la fonction d'atténuation linéaire $\mu(E_1)$, il est possible d'extraire la même caractéristique physique de la fonction combinée d'atténuation linéique $\mu'$ ($E_1$).

On peut écrire en général que :

$$\mu(E) = \rho \ \mu(E)/\rho$$

avec $\rho$ masse volumique en g.cm$^{-3}$ du matériau. On a donc aussi $\mu(E) = \rho \sigma(E)$ avec $\sigma(E)$ fonction d'atténuation massique du matériau en cm$^2$/g. Ces deux grandeurs $\rho$ et $\sigma(E)$ permettent de caractériser le matériau.

Pour les matériaux composés qui sont des mélanges de corps purs, la fonction d'atténuation massique est

égale à : $\sigma(E) = \sum_i \omega_i \sigma_i(E)$ avec $\omega_i$ proportions massiques de chaque corps pur dans le mélange et $\sigma_i(E)$ fonctions d'atténuation massique de chaque corps pur dans le mélange, ces grandeurs sont connues et tabulées.

De la même manière que l'on a défini une fonction combinée d'atténuation linéique $\mu'(E)$, on peut définir une fonction d'atténuation massique combinée $\sigma'(E)$ avec $\sigma'(E) = \mu'(E)/\rho$.

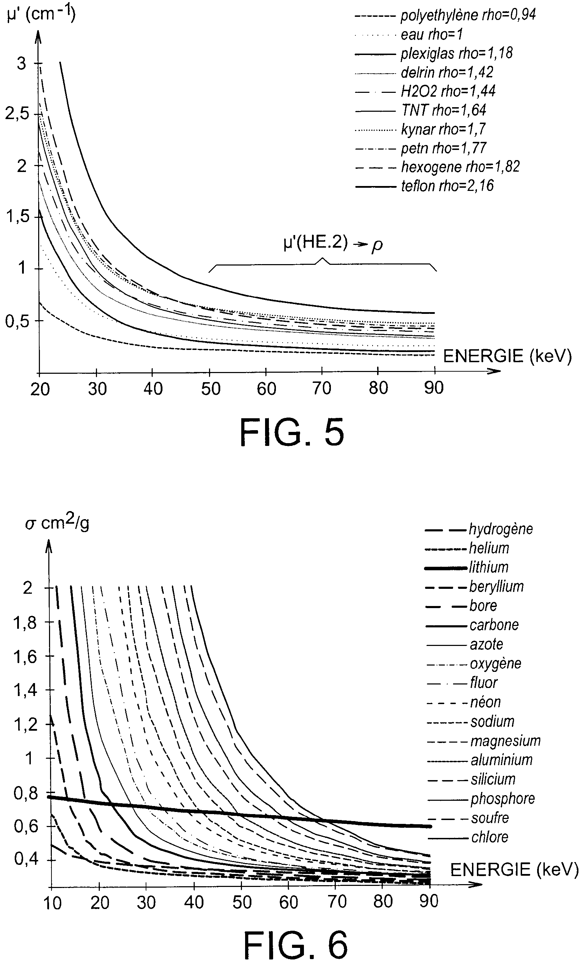

On a représenté sur les figures 4 et 5 d'une part la variation de la fonction d'atténuation massique combinée $\sigma'(E)$ en fonction de l'énergie E diffusée et la variation de la fonction combinée d'atténuation linéique $\mu'(E)$ en fonction de E diffusée pour un certain nombre de matériaux usuels. On voit que sur ces deux figures, l'évolution des courbes est similaire au facteur $\rho$ près.

La fonction d'atténuation massique $\sigma(E)$ possède une composante Compton prépondérante à haute énergie, cette composante traduisant la capacité du matériau à faire diffuser les photons ionisants incidents avec changement de longueur d'onde et une composante photoélectrique prépondérante à basse énergie, cette composante photoélectrique traduisant la capacité du matériau à stopper les photons ionisants incidents.

Dans ce contexte, par basse énergie, on entend une énergie inférieure à environ 50 keV, par haute énergie, on entend une énergie supérieure ou égale à environ 50 keV. Pour les matériaux courants en mélange, composés d'éléments purs légers comme l'hydrogène, le carbone, l'oxygène, l'azote, il se peut qu'ils comportent une proportion plus importante d'oxygène et d'azote que d'hydrogène ou de carbone. Or ces éléments purs prépondérants sont les plus lourds. Le numéro atomique Z est égal à 7 pour l'azote, 8 pour l'oxygène alors qu'il ne vaut que 6 pour le carbone et 1 pour l'hydrogène. Une conséquence de cela est que ces matériaux ont un numéro atomique effectif massique élevé, compris entre environ 6,7 et 8. Une autre conséquence est que la pente de décroissance de la courbe illustrant la variation de la fonction combinée d'atténuation linéique $\mu'(E)$ en fonction de E est plus grande que celle qu'aurait la fonction combinée d'atténuation linéique pour d'autres matériaux dont le numéro atomique effectif massique serait moindre. Ce dernier constat vient du fait qu'à basse énergie, l'effet prépondérant est l'effet photoélectrique pour lequel la fonction d'atténuation massique $\sigma(E)$ est proportionnelle à $Z^r/E^s$ avec l'exposant r compris entre environ 3,1 et 4 et l'exposant s sensiblement égal à 3.

En se référant à la figure 6, qui illustre la variation de la fonction d'atténuation massique $\sigma(E)$ en fonction de l'énergie pour une palette de corps purs, on s'aperçoit que la pente, à une énergie donnée, de l'oxygène et de l'azote est plus grande que celle de l'hydrogène ou du carbone et cela pour des énergies inférieures à 50 keV.

La même conclusion peut être tirée pour d'une part, les matériaux composés de corps purs et d'autre part, la fonction d'atténuation massique combinée $\sigma'(E)$.

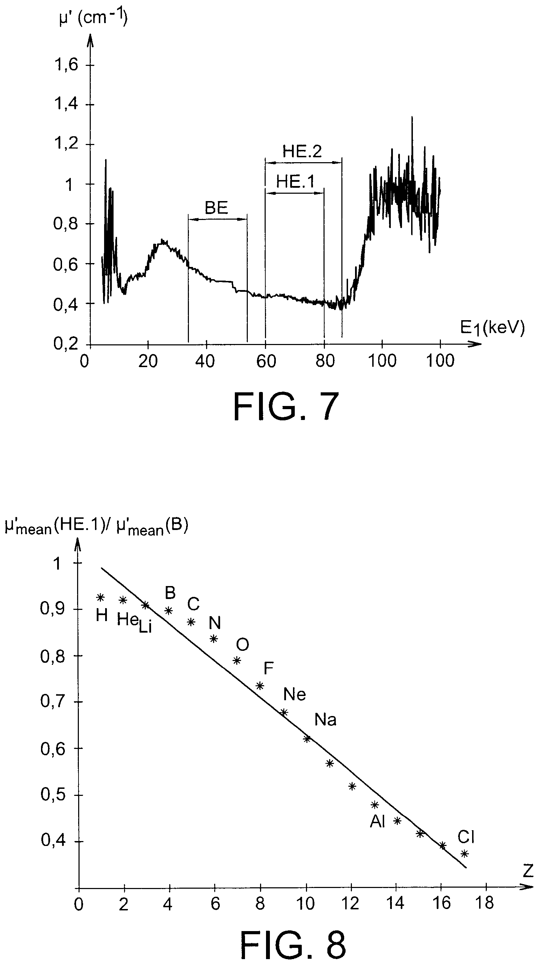

Pour avoir accès à la pente et ensuite au numéro atomique ou au numéro atomique effectif massique selon que le matériau à identifier est un corps pur ou non, les inventeurs préconisent de sélectionner au moins deux plages d'énergie distinctes dans la représentation de la fonction combinée linéique $\mu'$ en fonction de l'énergie $E_1$ diffusée, l'une s'étendant dans des énergies plus basses que l'autre. Ces deux plages d'énergie peuvent se recouper, ce qui signifie qu'elles ne sont pas forcément disjointes. La plage la plus basse est appelée BE sur la figure 7 et la plage la plus haute est appelée HE.1. Cette figure 7 illustre la variation de la fonction combinée d'atténuation linéique $\mu'(E_1)$ en fonction de l'énergie $E_1$ diffusée.

En calculant pour chaque plage d'énergie BE et HE.1, une grandeur $\eta$ représentative de la fonction combinée d'atténuation linéique $\mu'(E_1)$, on va en déduire au moins une caractéristique physique du matériau à caractériser. La grandeur $\eta$ représentative de la fonction combinée d'atténuation linéique $\mu'(E_1)$ est de préférence un indicateur statistique. Dans l'exemple traité et illustré à partir de la figure 7, la grandeur $\eta$ représentative de la fonction combinée d'atténuation linéique $\mu'(E_1)$ est une moyenne de la dite fonction. On prendra généralement la moyenne arithmétique bien que d'autres types de moyennes soient envisageables comme la moyenne géométrique, la moyenne harmonique. En variante, au lieu de calculer une moyenne, on aurait pu calculer une intégrale dont les bornes seraient celles de la plage. D'autres indicateurs statistiques sont possibles comme la médiane par exemple. On appelle la moyenne de la fonction combinée d'atténuation linéique sur la plage BE $\mu'_{mean}(BE)$ et la moyenne de la fonction combinée d'atténuation linéique sur la plage HE.1 $\mu'_{mean}(HE.1)$. On va utiliser ces deux moyennes en les comparant, par exemple en déterminat leur rapport, pour estimer le numéro atomique Z ou le numéro atomique effectif massique $Z_{eff-m}$ du matériau à caractériser. Un avantage d'utiliser un rapport des deux moyennes de la fonction combinée d'atténuation linéique est que l'on a éliminé la masse volumique $\rho$.

La figure 8 est un graphique qui montre clairement la relation, pour des corps purs étalons, entre leur numéro atomique Z et la valeur du rapport $\mu'_{mean}(HE.1)/\mu'_{mean}(BE)$. La moyenne de la fonction combinée d'atténuation linéique sur la plage BE $\mu'_{mean}(BE)$ et la moyenne de la fonction combinée d'atténuation linéique sur la plage HE.1 pour les matériaux étalons ont été obtenues par calcul.

Plus le numéro atomique Z est élevé moins le rapport $\mu'_{mean}(HE.1)/\mu'_{mean}(BE)$ est élevé. La plage BE est comprise entre 35 et 45 keV et la plage HE.1 est comprise entre 50 et 75 keV. Les étoiles correspondent à des corps purs étalons.

La droite qui passe par le plus grand nombre d'étoiles, permet de mettre en évidence la relation qui existe entre le rapport $\mu'_{mean}$(HE.1)/ $\mu'_{mean}$(BE) et Z sur une grande plage de valeurs de Z.

Après avoir calculé le rapport $\mu'_{mean}$(HE.1)/ $\mu'_{mean}$(BE) pour le matériau à caractériser que l'on suppose un corps pur, en le reportant dans le graphique côté ordonnée, on estime aisément son numéro atomique, côté abscisse, à l'aide de la droite.

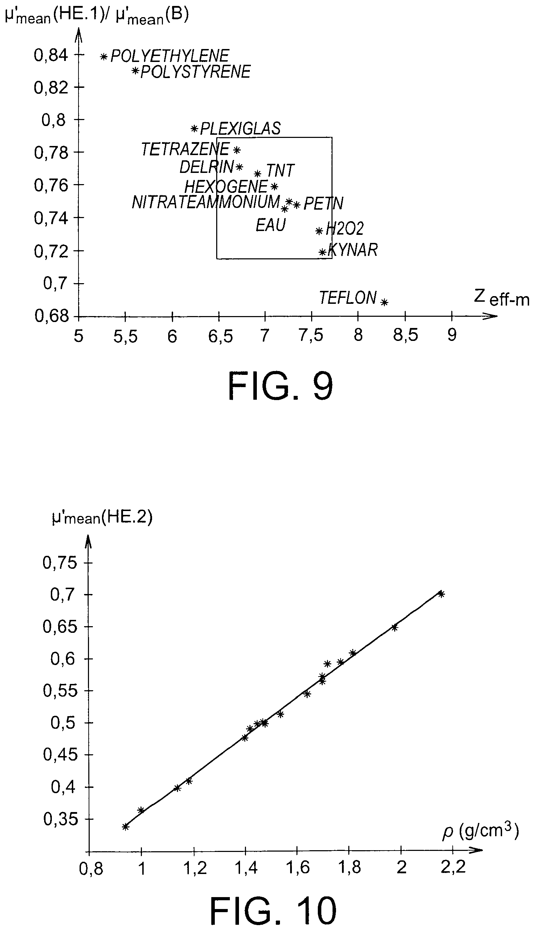

Ce qui vient d'être dit pour des corps purs s'applique également pour des matériaux étalons qui sont des mélanges de corps purs. La figure 9 illustre la relation existant entre le rapport $\mu'_{mean}$(HE.1)/ $\mu'_{mean}$(BE) et le numéro atomique effectif massique $Z_{eff-m}$ de matériaux usuels, ces matériaux contenant de l'oxygène, du carbone, de l'hydrogène ou de l'azote. Pratiquement, en se basant sur des matériaux étalons pour lesquels la relation entre numéro atomique effectif massique et rapport $\mu'_{mean}$(HE.1)/ $\mu'_{mean}$(BE) est tabulée, il est aisé de déterminer le numéro atomique effectif massique $Z_{eff-m}$ du matériau à caractériser. Sur cette figure 9, on a défini trois groupes de matériaux en mélange, ceux contenant du carbone, de l'hydrogène, de l'oxygène, de l'azote ayant un numéro atomique effectif massique faible inférieur à 6,5, ceux contenant du carbone, de l'hydrogène, de l'oxygène, de l'azote ayant un numéro atomique effectif massique élevé compris entre 6,5 et 7,5 voire 8 et ceux contenant des matériaux plus lourds par exemple du fluor, du chlore, ayant un numéro atomique effectif massique supérieur à 8.

En outre, pour les matériaux courants composés d'éléments purs légers comme d'hydrogène, le carbone, l'oxygène, l'azote, le fluor etc, on constate que la fonction d'atténuation massique combinée σ' (E) converge vers une même valeur, dès que l'on atteint des énergies élevées, par exemple supérieures à quelques dizaines de keV, pour lesquelles la diffusion Compton est prépondérante. Ainsi, la fonction combinée d'atténuation linéique μ' (E) tend, pour les énergies élevées, vers une valeur qui ne dépend essentiellement que de la masse volumique ρ du matériau.

Selon l'invention, on sélectionne une troisième plage d'énergie HE.2, pour laquelle l'effet Compton est prépondérant, on calcule une grandeur η' représentative de la fonction combinée d'atténuation linéique μ' (E) sur cette troisième plage et grâce à cette grandeur η', on estime la masse volumique ρ du matériau à caractériser. La plage d'énergie HE.2 est une plage correspondant à des énergies élevées, par exemple, comprises entre 50 keV et 150 keV. On l'a schématisée sur la figure 7. La plage HE.2 possède au moins une énergie plus élevée que celles de la plage BE. Ainsi, la plage BE et la plage HE.2 peuvent se chevaucher partiellement. Les plages HE.1 et HE.2 peuvent être confondues, peuvent se chevaucher partiellement ou bien être disjointes.

Comme on l'a expliqué plus haut, la grandeur η' représentative de la fonction combinée d'atténuation linéique μ' (E) peut être un indicateur statistique tel qu'une moyenne ou une intégrale de la dite fonction combinée d'atténuation linéique μ' (E), calculée sur la plage HE.2. Pratiquement, en se basant sur les données tabulées de masse volumique pour différents matériaux étalons usuels et sur la grandeur η' dans la troisième plage d'énergie HE.2, il est facile de mettre en évidence une relation entre la grandeur η' et la masse volumique ρ. La grandeur η' pour les matériaux étalons est obtenue dans les mêmes conditions d'acquisition des spectres, de calcul et de sélection de la plage d'énergie que la grandeur η' pour le matériau à caractériser.

La figure 10 montre la relation entre la masse volumique ρ de différents matériaux étalons usuels et la moyenne $\mu'_{mean}$(HE.2) de la fonction combinée d'atténuation linéique μ' (E) sur la plage d'énergie HE.2. Chaque point correspond à un matériau étalon. On suppose que dans l'exemple de la figure 10, la plage d'énergie HE. 2 va de 50 keV à 100 keV. La droite qui passe par le plus grand nombre de points, permet de mettre en évidence la relation qui existe entre $\mu'_{mean}$(HE.2) et ρ, sur une grande plage de valeurs de ρ comprise entre 0,8 et 2,2 g/cm$^3$.

Les trois plages d'énergie BE, HE.1, HE.2 sont à optimiser selon les matériaux que l'on cherche à caractériser et selon les énergies que le détecteur spectrométrique est capable de détecter avec une bonne résolution énergétique.

A l'issue des étapes précédentes, on dispose donc pour le matériau à caractériser d'un ensemble de caractéristiques physiques, à savoir dans l'exemple décrit, sa masse volumique et son numéro atomique ou son numéro atomique effectif massique. Cet ensemble est appelé par la suite ensemble de caractéristiques physiques estimé.

Avec ce qui précède, les moyens de traitement 200 du dispositif de caractérisation objet de l'invention, illustré à la figure 1, comportent donc des moyens de détermination 201 d'une fonction combinée d'atténuation linéique à partir des deux spectres en énergie détectés par le détecteur, correspondant à deux profondeurs de diffusion de l'intersection des axes de collimation de la source et du détecteurs et de la position de la source et du détecteur par rapport à l'objet. En fait on utilise comme on l'a vu précédemment la différence de trajets $\Delta\ell$ parcourus par les photons ionisants avant ou après diffusion d'une acquisition à l'autre.

Ils comportent également :

- des moyens de sélection 202 dans cette fonction combinée d'atténuation linéique de plusieurs plages d'énergie,
- des moyens de calcul 203, dans chaque plage d'énergie, d'une grandeur représentative de la fonction combinée d'atténuation linéique,
- des moyens d'estimation 204 à partir d'au moins deux de ces grandeurs, d'au moins une caractéristique physique du matériau à caractériser, par une comparaison avec les mêmes grandeurs, obtenues avec des matériaux connus.

On utilise une relation existant entre des mêmes grandeurs de matériaux étalons et la caractéristique physique connue desdits matériaux étalons, ces grandeurs de matériaux étalons pouvant être obtenues à l'aide du dispositif en remplaçant l'objet en matériau à caractériser par des échantillons de matériaux étalons. On peut également estimer ces grandeurs de matériaux étalons par des calculs ou des modélisations.

Le procédé selon l'invention peut comporter, en outre, une étape d'identification du matériau à caractériser avec une comparaison, selon un critère déterminé, entre l'ensemble de caractéristiques physiques estimé avec des ensembles des mêmes caractéristiques physiques de matériaux connus d'intérêt, appelés par la suite ensembles de caractéristiques physiques connus. Ces caractéristiques physiques de matériaux connus sont aussi connues, on les trouve dans des ouvrages, des encyclopédies, la documentation d'industriels commercialisant ces matériaux, sur l'Internet.

On peut pour cela disposer dans un espace à plusieurs dimensions, d'une part plusieurs ensembles de caractéristiques physiques connus, et d'autre part l'ensemble de caractéristiques physiques estimé pour effectuer la comparaison selon le critère déterminé. Le matériau à caractériser est alors le matériau d'intérêt connu satisfaisant le mieux à la comparaison.

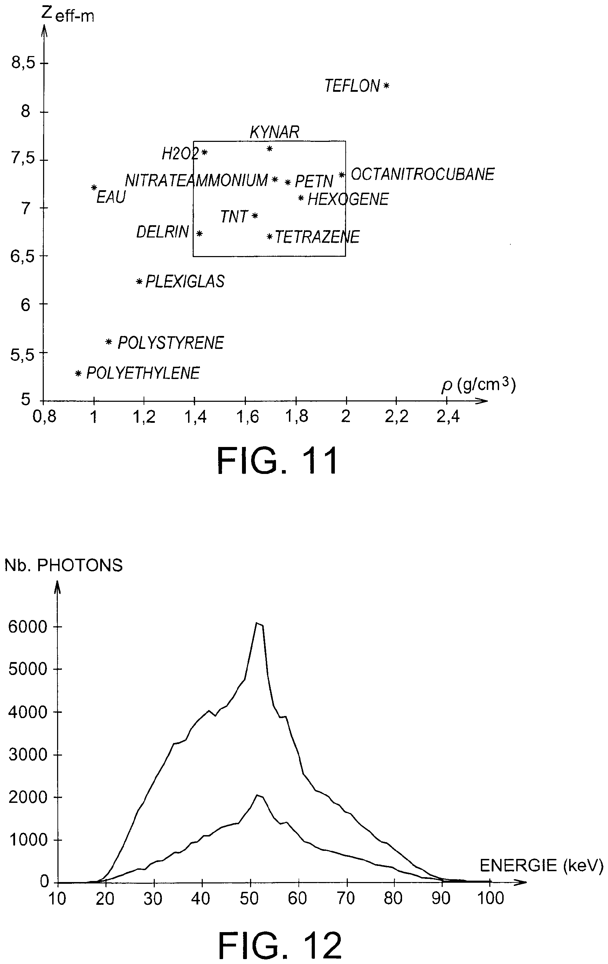

La figure 11 donne l'exemple d'un repère à deux dimensions dans lequel sont positionnées des étoiles, chacune correspondant à un ensemble numéro atomique effectif massique $Z_{eff-m}$ - masse volumique $\rho$ d'un matériau connu.

Ces matériaux sont soit des matériaux considérés comme dangereux, comme l'hexogène (cyclotriméthylène trinitramine), le TNT (trinitrotoluène), la nitroglycérine, le DNT (dinitrotoluène), le tétrazène, l'octanitrocubane, soit des matériaux plus courants comme le polyéthylène, le polystyrène, le plexiglas, le polyuréthane, le Kynar qui est un PVDF (polyfluorure de vinylidène) commercialisé par Arkema, le polytétrafluoroéthylène connu sous la marque Téflon déposée par DuPont, un polyamide tel que celui connu sous la dénomination de nylon qui est une marque de Burbery's, le polyoxyméthylène connu sous la marque Delrin déposée par DuPont.

On s'aperçoit que dans ce repère, les matériaux considérés comme dangereux sont tous regroupés dans une zone qui a été encadrée, et que les autres matériaux plus courants sont hors de cette zone.

Le critère déterminé peut être un critère de proximité en distance entre l'ensemble de caractéristiques physiques estimé et chacun des ensembles de caractéristiques physiques connues.

En se référant de nouveau à l'exemple de la figure 11, on dispose l'ensemble numéro atomique effecti massique-masse volumique estimé dans ce repère. On l'a matérialisé par un point. Avec ce critère de comparaison, on recherche dans le repère, quel ensemble numéro atomique effectif massique-masse volumique connu est le plus proche géométriquement de l'ensemble numéro atomique effectif massique-masse volumique estimé. Dans l'exemple traité, il s'agit du Kynar.

Il est possible d'utiliser un critère de comparaison autre que la proximité en distance. Par exemple, il est possible d'utiliser un critère de comparaison probabiliste, si les matériaux connus font référence à des distributions de probabilité. Une fois que l'ensemble de caractéristiques physiques estimé est repéré dans l'espace où se trouvent chacun des ensembles de caractéristiques physiques connus, le matériau à caractériser est celui qui est dans le voisinage de l'ensemble de caractéristiques physiques connu ayant la probabilité la plus grande.

La description qui vient d'être faite s'est appuyée sur le fait que l'on identifiait le matériau à caractériser à partir de deux de ses caractéristiques physiques. Il peut être nécessaire dans certains cas d'inclure une autre caractéristique physique dans la recherche du matériau. On pourra pour cela déterminer cette autre caractéristique physique, à partir d'au moins une grandeur $\eta$ représentative de la fonction combinée d'atténuation linéique $\mu'$ (E) sur au moins une autre plage d'énergie. Pour la détermination d'un matériau donné, on pourra utiliser pour une des caractéristiques un indicateur statistique $\eta$, par exemple la moyenne, et pour une autre caractéristique un autre indicateur statistique, par exemple l'intégrale.

Si l'on a besoin de plus de deux caractéristiques physiques, l'identification ne se fera plus dans un espace à deux dimensions, mais dans un espace à plus de deux dimensions. Le nombre de dimensions dépend du nombre de caractéristiques physiques estimées.

Nous allons maintenant appliquer le procédé objet de l'invention à un exemple concret et réel. Cet exemple est bien sûr non limitatif. Le dispositif de caractérisation utilisé est celui illustré à la figure 1. L'objet 100 analysé est un bloc cubique de 0,5 dm$^3$ de Kynar. Les caractéristiques physiques de ce matériau sont les suivantes : masse volumique $\rho = 1,79$ g/cm$^3$, numéro atomique effectif massique $Z_{eff-m} = 7,62$. On suppose bien entendu que le matériau de l'échantillon 100 est inconnu et que l'on cherche à l'identifier.

On utilise un angle de diffusion $\theta$ de 120°. Lors de l'irradiation, on réalise deux acquisitions du flux de photons ionisants diffusé, lors d'une acquisition le volume d'inspection $\delta V$ est à une profondeur de diffusion P1=15 mm de la surface par laquelle le faisceau de photons ionisants incident pénètre dans le matériau à caractériser de l'objet. Lors de l'autre acquisition le volume d'inspection $\delta V$ est à une profondeur de diffusion P2=30 mm de ladite surface. Les deux spectres du flux de photons ayant diffusé délivrés par le détecteur spectrométrique sont illustrés sur la figure 12.

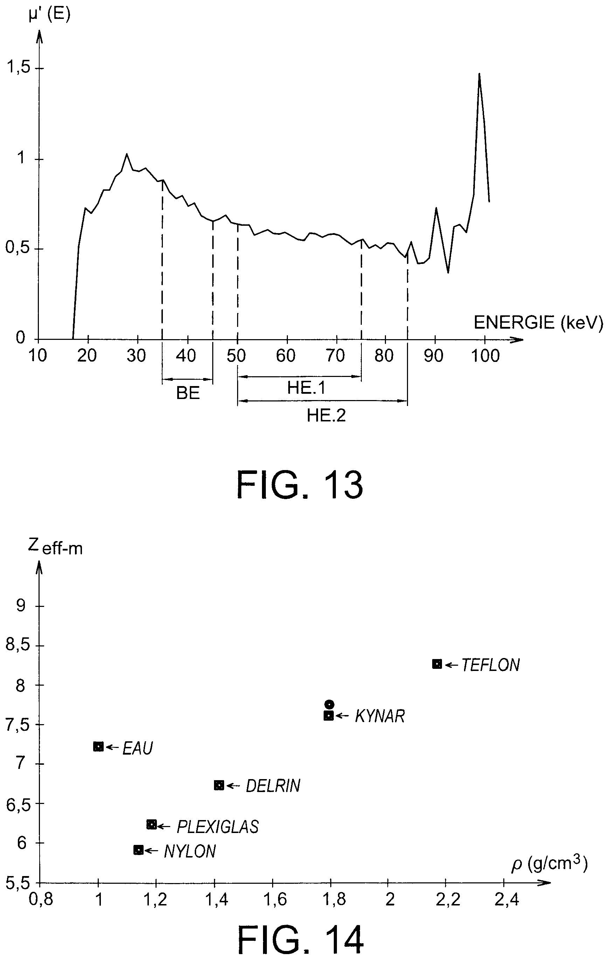

Si l'on construit la courbe de la fonction combinée d'atténuation linéaire $\mu'$ (E) en fonction de l'énergie E diffusée, comme décrit précédemment, on obtient la représentation de la figure 13.

A partir de cette courbe, on sélectionne les fenêtres suivantes : BE = 35-45 keV, HE.1= 50-75 keV et HE.2= 50-83 keV. On s'arrange pour que la plage basse BE n'englobe pas des énergies très basses, ici inférieures à 30 keV car on s'aperçoit que la courbe chute fortement. Cette chute est due essentiellement à l'influence de la réponse du détecteur spectrométrique.

On estime, à partir des deux fenêtres BE et HE.1 une première caractéristique physique du matériau à caractériser, c'est son numéro atomique effectif massique $Z_{eff-m}$. On utilise comme grandeur $\eta$ représentative de la fonction combinée d'atténuation linéique $\mu'$ (E), la moyenne $\mu'_{mean}$(E) arithmétique de ladite fonction combinée d'atténuation linéique sur la plage BE et sur la plage HE.1. Le résultat du calcul donne $Z_{eff-m}$ 7,7628.

On estime, une seconde caractéristique physique du matériau à caractériser, c'est la masse volumique $\rho$. On utilise aussi comme grandeur $\eta'$ représentative de la fonction combinée d'atténuation linéique $\mu'$ (E) la moyenne $\mu'_{mean}$(E) arithmétique de ladite fonction combinée d'atténuation linéique $\mu'$ (E) sur la troisième plage HE.2. Le résultat du calcul donne $\rho$ = 1,7948 g/cm$^3$.

Ces estimations se font à l'aide de matériaux étalons comme on l'a décrit précédemment.

On place dans un espace à deux dimensions $Z_{eff-m}(\rho)$ illustré sur la figure 14, des ensembles numéro atomique effectif massique-masse volumique de matériaux connus tels que l'eau, le Téflon, le Kynar, le Delrin, le plexiglas, le nylon. Ils sont représentés par des carrés. On place dans cet espace, l'ensemble numéro atomique effectif massique-masse volumique estimé du matériau à caractériser, cet ensemble est représenté par le rond noir. On compare l'ensemble numéro atomique effectif massique-masse volumique estimé à ceux des matériaux connus. Le rond noir est géométriquement le plus proche du carré du Kynar, ce qui permet de conclure que le matériau à caractériser est vraissemblablement du Kynar.

## Revendications

**1.** Procédé de caractérisation d'un matériau comportant les étapes suivantes :

a°) disposer un objet (100) en le matériau à caractériser, une source de photons ionisants (10) collimatée ayant un axe de collimation (10.2) et un détecteur spectrométrique (11) collimaté ayant un axe de collimation (11.2), de façon que les deux axes de collimation (10.2, 11.2) soient sécants dans le matériau de l'objet (100) et définissent une profondeur (P1, P2) de diffusion dans le matériau de l'objet (100) et un angle de diffusion ($\theta$) non nul,

b°) irradier l'objet (100) avec des photons ionisants générés par la source (10) et acquérir, au moyen du détecteur (11), un premier spectre en énergie correspondant à une diffusion d'un premier flux de photons ionisants ($X_1(E_1)$) à une première profondeur de diffusion (P1) selon ledit angle de diffusion ($\theta$) et un second spectre en énergie correspondant à une diffusion d'un second flux de photons ionisants ($X_2(E_1)$) à une seconde profondeur de diffusion (P2) selon ledit angle de diffusion ($\theta$), les photons ionisants parcourant dans le matériau des trajets ($\ell_{bef}, \ell_{aft}$) avant et après la diffusion tels que le rapport des trajets ($\varepsilon$) avant et après la diffusion, appelé facteur d'asymétrie, soit sensiblement constant d'une acquisition à l'autre,

c°) déterminer une fonction combinée d'atténuation linéique ($\mu'$ ($E_1$)) à partir des deux spectres en énergie après diffusion ($X_1(E_1)$, $X_2(E_1)$) et de la différence de trajets ($\ell_{aft2}$ - $\ell_{aft1}$ ou $\ell_{bef2}$ - $\ell_{bef1}$) parcourus par les photons ionisants avant ou après diffusion d'une acquisition à l'autre, ledit procédé étant **caractérisé en ce qu'**il comprend les étapes suivantes:

d°) sélectionner dans cette fonction combinée d'atténuation linéique plusieurs plages d'énergie (BE, HE.1, HE.2)

e°) calculer dans chaque plage d'énergie une grandeur ($\eta$, $\eta'$) représentative de la fonction combinée d'atténuation linéique,

f°) estimer à partir d'au moins deux de ces grandeurs, au moins une caractéristique physique du matériau à caractériser, par une comparaison avec des même grandeurs obtenues à partir de matériaux connus.

**2.** Procédé selon la revendication 1, dans lequel à l'étape e°) la grandeur ($\eta$, $\eta'$) représentative de la fonction combinée d'atténuation linéique est un indicateur statistique tel qu'une moyenne ou une intégrale.

**3.** Procédé selon l'une des revendications 1 ou 2, dans lequel le facteur d'asymétrie ($\varepsilon$) est sensiblement égal à un.

**4.** Procédé selon l'une des revendications 1 à 3, dans lequel lorsque à l'étape d°) on sélectionne deux plages d'énergie (BE, HE.1) parmi lesquelles une plage basse (BE) et une plage haute (HE.1), la plage basse comportant au moins une énergie inférieure à celles de la plage haute, la caractéristique physique du matériau à caractériser estimée à l'étape f°) est son numéro atomique (Z) ou son numéro atomique effectif massique ($Z_{eff}$).

**5.** Procédé selon l'une des revendications 1 à 4, dans lequel à l'étape f°) on réalise un rapport entre lesdites deux grandeurs.

**6.** Procédé selon l'une des revendications 4 ou 5, dans lequel la plage basse (BE) est comprise entre environ 20 et 50 keV et la plage haute est comprise entre environ 50 et 150 keV.

**7.** Procédé selon l'une des revendications 4 à 6, dans lequel lorsque à l'étape d°) on sélectionne une troisième plage d'énergie (HE.2), comportant au moins une énergie supérieure à celles de la plage basse, à l'étape f°) la caractéristique physique du matériau à caractériser étant alors sa masse volumique ($\rho$).

**8.** Procédé selon la revendication 7, dans lequel la troisième plage d'énergie (HE.2) est comprise entre environ 50 et 150 keV.

**9.** Procédé selon l'une des revendications 1 à 8, dans lequel lorsque à l'étape f°) on estime au moins deux caractéristiques physiques du matériau à caractériser, le procédé comporte, en outre, une étape d'identification du matériau à caractériser consistant à :

disposer pour des matériaux connus d'intérêt, des mêmes caractéristiques physiques, comparer les caractéristiques physiques du matériau à caractériser à celles des matériaux connus d'intérêt, le matériau à caractériser étant le matériau connu d'intérêt satisfaisant le mieux à la comparaison.

**10.** Procédé selon la revendication 9, dans lequel la comparaison s'effectue selon un critère de proximité géométrique ou un critère probabiliste.

**11.** Dispositif de caractérisation d'un matériau comportant :

- une source de photons ionisants (10) collimatée ayant un axe de collimation (10.2), destinée à irradier un objet (100) du matériau à caractériser avec des photons ionisants incidents,
- un détecteur spectrométrique (11) collimaté ayant un axe de collimation (11.2), la source (10) et le détecteur (11) étant collimatés de telle sorte que leurs axes de collimation (10.2, 11.2) forment un angle de diffusion ($\theta$) non nul, et soient sécants dans le matériau à caractériser à une profondeur de diffusion (P1, P2), le détecteur (11) comprenant des moyens (11.3) aptes à produire un spectre en énergie d'un flux de photons ionisants diffusé qu'il détecte,
- des moyens de déplacement (110) de la source (10) et/ou du détecteur (11) et/ou de l'objet (100), de telle sorte que l'intersection des axes de collimation (10.2, 11.2) de la source et du détecteur puisse varier entre deux profondeurs de diffusion (P1, P2) différentes dans le matériau à caractériser,
- des moyens de détermination (201) d'une fonction combinée d'atténuation linéique à partir d'un premier spectre en énergie ($X_1(E_1)$) correspondant à une diffusion d'un premier flux de photons ionisants à une première profondeur de diffusion (P1) selon ledit angle de diffusion ($\theta$) et d'un second spectre en énergie ($X_2(E_1)$) correspondant à une diffusion d'un second flux de photons ionisants à une seconde profondeur de diffusion (P2) selon ledit angle de diffusion ($\theta$), et à partir des positions de la source et du détecteur par rapport au matériau à caractériser, ces premier et second flux de photons ionisants diffusés étant détectés par le détecteur, ledit dispositif étant **caractérisé en ce qu'**il comporte:

- des moyens de sélection (202) dans cette fonction combinée d'atténuation linéique de plusieurs plages d'énergie (HE.1, BE, HE.2),
- des moyens de calcul (203), dans chaque plage d'énergie (HE.1, BE, HE.2), d'une grandeur représentative de la fonction combinée d'atténuation linéique,
- des moyens d'estimation (204), à partir d'au moins deux de ces grandeurs, d'au moins une caractéristique physique du matériau à caractériser, par une comparaison avec des mêmes grandeurs obtenues à partir de matériaux connus.

**Patentansprüche**

**1.** Verfahren zur Charakterisierung eines Materials, umfassend die nachfolgenden Schritte:

a°) Bereitstellen eines Objekts (100) aus dem zu charakterisierenden Material, einer kollimierten, ionisierenden Photonenquelle (10) mit einer Kollimationsachse (10.2) und einem kollimierten, spektrometrischen Sensor (11) mit einer Kollimationsachse (11.2), so dass die beiden Kollimationsachsen (10.2, 11.2) sich im Material des Objekts (100) schneiden und eine Diffusionstiefe (P1, P2) in dem Material des Objekts (100) und einen Diffusionswinkel ($\theta$) ungleich null definieren,

b°) Bestrahlen des Objekts (100) mit den von der Quelle (10) erzeugten ionisierenden Photonen und Erfassen eines erstes Energiespektrums mittels des Sensors (11), das einer Diffusion eines ersten Stroms ionisierender Photonen ($X_1(E_1)$) in einer ersten Diffusionstiefe (P1) unter dem Diffusionswinkel ($\theta$) entspricht, und eines zweiten Energiespektrums, das einer Diffusion eines zweiten Stroms ionisierender Photonen ($X_2(E_1)$) in einer zweiten Diffusionstiefe (P2) unter dem Diffusionswinkel ($\theta$) entspricht, wobei die ionisierenden Photonen in dem Material Wegstrecken ($\ell_{bef}$, $\ell_{aft}$) vor und nach der Diffusion zurücklegen, derart, dass das Verhältnis der Wegstrecken ($\varepsilon$) vor und nach der Diffusion, Asymmetriefaktor genannt, von einer Erfassung zur nächsten im Wesentlichen konstant ist,

c°) Bestimmen einer kombinierten Funktion linearer Dämpfung ($\mu'(E_1)$) ausgehend von den beiden Energiespektren nach der Diffusion ($X_1(E_1)$, $X_2(E_1)$) und der Differenz der Wegstrecken ($\ell_{aft2} - \ell_{aft1}$ oder $\ell_{bef2} - \ell_{bef1}$), die von den ionisierenden Photonen vor oder nach der Diffusion von einer Erfassung zur nächsten zurückgelegt werden, wobei das Verfahren **dadurch gekennzeichnet ist, dass** es nachfolgende Schritte umfasst:

d°) Auswählen mehrerer Energiebereiche (BE, HE.1, HE.2) aus dieser kombinierten Funktion linearer Dämpfung,

e°) Berechnen einer Größe ($\eta$, $\eta'$) aus jeder Energiemenge, die für die kombinierte Funktion linearer Dämpfung repräsentativ ist,

f°) Abschätzen zumindest einer physikalischen Eigenschaft des zu charakterisierenden Materials ausgehend von zumindest zwei dieser Größen durch Vergleich mit gleichen Größen, die von bekannten Materialien erhalten wurden.

2.  Verfahren nach Anspruch 1, wobei in Schritt e°) die für die kombinierte Funktion linearer Dämpfung repräsentative Größe ($\eta$, $\eta'$) ein statistischer Indikator, wie etwa ein Mittelwert oder ein Integral, ist.

3.  Verfahren nach einem der Ansprüche 1 oder 2, wobei der Asymmetriefaktor ($\varepsilon$) im Wesentlichen gleich eins ist.

4.  Verfahren nach einem der Ansprüche 1 bis 3, wobei in Schritt d°) zwei Energiebereiche (BE, HE.1) ausgewählt werden, darunter ein niedriger Bereich (BE) und ein hoher Bereich (HE.1), wobei der niedrige Bereich zumindest eine Energie geringer als die des hohen Bereichs aufweist, wobei die in Schritt f°) geschätzte physikalische Eigenschaft des zu charakterisierenden Materials dessen Atomzahl (Z) oder dessen effektive Atommassenzahl ($Z_{eff}$) ist.

5.  Verfahren nach einem der Ansprüche 1 bis 4, wobei in Schritt f°) ein Verhältnis zwischen den beiden Größen erstellt wird.

6.  Verfahren nach einem der Ansprüche 4 oder 5, wobei der niedrige Bereich (BE) zwischen etwa 20 und 50 keV und der hohe Bereich zwischen etwa 50 und 150 keV liegt.

7.  Verfahren nach einem der Ansprüche 4 bis 6, wobei in Schritt d°) ein dritter Energiebereich (HE.2) ausgewählt werden, der zumindest eine Energie höher als die des niedrigen Bereichs enthält, wobei dann in Schritt f°) die physikalische Eigenschaft des zu charakterisierenden Materials dessen Massendichte ($\rho$) ist.

8.  Verfahren nach Anspruch 7, wobei der dritte Energiebereich (HE.2) zwischen etwa 50 und 150 keV liegt.

9.  Verfahren nach einem der Ansprüche 1 bis 8, wobei dann, wenn in Schritt f°) zumindest zwei physikalische Eigenschaften des zu charakterisierenden Materials geschätzt werden, das Verfahren ferner einen Schritt des Kennzeichnen des zu charakterisierenden Materials umfasst, der besteht im:

Bereitstellen der gleichen physikalischen Eigenschaften für interessierende, bekannte Materialien,
Vergleichen der physikalischen Eigenschaften des zu charakterisierenden Materials mit denen von interessierenden, bekannten Materialien,
wobei das zu charakterisierende Material das interessierende bekannte Material ist, das dem Vergleich am besten entspricht.

10. Verfahren nach Anspruch 9, wobei der Vergleich nach einem geometrischen Näherungskriterium oder einem Wahrscheinlichkeitskriterium erfolgt.

11. Vorrichtung zur Charakterisierung eines Materials, enthaltend:

- eine kollimierte, ionisierende Photonenquelle (10) mit einer Kollimationsachse (10.2), die dazu bestimmt ist, ein Objekt (100) aus dem zu charakterisierenden Material mit einfallenden, ionisierenden Photonen zu bestrahlen,
- einem kollimierten, spektrometrischen Sensor (11) mit einer Kollimationsachse (11.2), wobei die Quelle (10) und der Sensor (11) so kollimiert sind, dass ihre beiden Kollimationsachsen (10.2, 11.2) einen Diffusionswinkel ($\theta$) ungleich null einschließen und sich im zu charakterisierenden Material in einer Diffusionstiefe (P1, P2) schneiden, wobei der Sensor (11) Mittel (11.3) enthält, die ein Energiespektrum eines verteilten, ionisierenden Photonenstroms erzeugen können, das er erfasst,
- Verlagerungsmittel (110) zum Verlagern der Quelle (10) und/oder des Sensors (11) und/oder des Objekts (100), derart, dass der Schnittpunkt der Kollimationsachsen (10.2, 11.2) der Quelle und des Sensors zwischen zwei unterschiedlichen Diffusionstiefen (P1, P2) im zu charakterisierenden Material variieren kann,
- Bestimmungsmittel (201) zum Bestimmen einer kombinierten Funktion linearer Dämpfung ausgehend von einem ersten Energiespektrum ($X_1(E_1)$), das einer Diffusion eines ersten ionisierenden Photonenstroms in einer ersten Diffusionstiefe (P1) unter dem Diffusionswinkel ($\theta$) entspricht, und von einem zweiten Energiespektrum ($X_2(E_1)$), das einer Diffusion eines zweiten ionisierenden Photonenstroms in einer zweiten Diffusionstiefe (P2) unter dem Diffusionswinkel ($\theta$) entspricht, und ausgehend von den Positionen der Quelle und des Sensors bezüglich des zu charakterisierenden Materials, wobei dieser erste und zweite verteilte, ionisierende Photonenstrom von dem Sensor erfasst werden, wobei die Vorrichtung **dadurch gekennzeichnet ist, dass** sie enthält:

- Auswahlmittel (202) zum Auswählen mehrerer Energiebereiche (HE.1, BE, HE.2) aus dieser kombinieren Funktion linearer Dämpfung,
- Rechenmittel (203) zum Berechnen einer Größe aus jedem Energiebereich (HE.1, BE, HE.2), die für die kombinierte Funktion linearer Dämpfung repräsentativ ist,
- Schätzmittel (204) zum Abschätzen zumindest einer physikalischen Eigenschaft des zu charakterisierenden Materials ausgehend von zumindest zwei dieser Größen durch Vergleich mit gleichen Größen, die von bekannten Material erhalten wurden.

**Claims**

1. Method for characterizing a material comprising the following steps:

a) arranging an object (100) made of the material to be characterized, a collimated ionizing photon source (10) having a collimation axis (10.2) and a collimated spectrometric detector (11) having a collimation axis (11.2), such that the two collimation axes (10.2, 11.2) are secant in the material of the object (100) and define a scattering depth (P1, P2) in the material of the object (100) and a scatter angle ($\theta$) different to zero,
b) irradiating the object (100) with ionizing photons generated by the source (10) and acquiring, by means of the detector (11), a first energy spectrum corresponding to scattering of a first ionizing photon flux ($X_1(E_1)$) at a first scattering depth (P1) according to said scattering angle ($\theta$) and a second energy spectrum corresponding to scattering of a second ionizing photon flux ($X_2(E_1)$) at a second scattering depth (P2) according to said scattering angle ($\theta$), the ionizing photons passing through the material by paths ($\ell_{bef}$, $\ell_{aft}$) before and after scattering such that the ratio of the paths ($\varepsilon$) before and after scattering, called asymmetry factor, is substantially constant from one acquisition to another,
c) determining a combined linear attenuation function ($\mu'(E_1)$) based on the two energy spectra after scattering ($X_1E_1$), $X_2(E_1)$) and the path difference ($\ell_{aft2}$ - $\ell_{aft1}$ or $\ell_{bef2}$ - $\ell_{bef1}$) travelled by the ionizing photons before and after scattering from one acquisition to another, said method being **characterized in that** it comprises the following steps:
d) selecting in this combined linear attenuation function a plurality of energy ranges (BE, HE.1, HE.2),
e) calculating in each energy range a representative quantity ($\eta$, $\eta'$) of the combined linear attenuation function,
f) estimating on the basis of at least two of these quantities, at least one physical characteristic of the material to be **characterized, by** means of a comparison with the same quantities obtained using known materials.

2. Method according to claim 1, wherein, in step e), the representative quantity ($\eta$, $\eta'$) of the combined linear attenuation function is a statistical indicator such as a mean or an integral.

3. Method according to any of claims 1 or 2, wherein the asymmetry factor ($\varepsilon$) is substantially equal to one.

4. Method according to any of claims 1 to 3, wherein, when in step d), two energy ranges (BE, HE.1) including a lower range (BE) and an upper range (HE.1) are selected, the lower range comprising at least one energy less than those of the upper range, the physical characteristic of the material to be characterized estimated in step f) is the atomic number (Z) thereof or the mass effective atomic number ($Z_{eff}$) thereof.

5. Method according to any of claims 1 to 4, wherein, in step f), a ratio between said two quantities is produced.

6. Method according to any of claims 4 or 5, wherein the lower range (BE) is between approximately 20 and 50 keV and the upper range is between approximately 50 and 150 keV.

7. Method according to any of claims 4 to 6, wherein, when in step d), a third energy range (HE.2) is selected, comprising at least one energy greater than those of the lower range, in step f) the characteristic of the material to be characterized then being the density ($\rho$) thereof.

8. Method according to claim 7, wherein the third energy range (HE.2) is between approximately 50 and 150 keV.

9. Method according to any of claims 1 to 8, wherein, when in step f), at least two physical characteristics of the material to be characterized are estimated, the method further comprises a step for identifying the material to be characterized consisting of:

   obtaining for known materials of interest, the same physical characteristics, comparing the physical characteristics of the material to be characterized with those of the known materials of interest, the material being the material of interest most suitable for the comparison.

10. Method according to claim 9, wherein the comparison is performed according to a geometric proximity criterion or a probabilistic criterion.

11. Device for characterizing a material comprising:

   - a collimated ionizing photon source (10) having a collimation axis, for irradiating an object (100) of the material to be characterized with incident ionizing photons,
   - a collimated spectrometric detector (11) having a collimation axis (11.2), the source (10) and the detector (11) being collimated such that the collimation axes (10.2, 11.2) thereof form a scattering angle ($\theta$) different to zero, and are secant in the material to be characterized at a scattering depth (P1, P2), the detector (11) comprising means (11.3) suitable for producing an energy spectrum of a scattered ionizing photon flux detected thereby,
   - means (110) for moving the source (10) and/or the detector (11) and/or the object (100), such that the intersection of the collimation axes (10.2, 11.2) of the source and the detector can vary between two different scatter depths (P1, P2) in the material to be characterized,
   - means (201) for determining a combined linear attenuation function based on a first energy spectrum corresponding to scattering of a first ionizing photon flux ($X_1(E_1)$) at a first scattering depth (P1) according to said scattering angle ($\theta$) and a second energy spectrum corresponding to scattering of a second ionizing photon flux ($X_2(E_1)$) at a second scattering depth (P2) according to said scattering angle($\theta$), and based on the positions of the source and the detector in relation to the material to be characterized, these first and second scattered ionizing photon fluxes being detected by the detector, said device being **characterized in that** it comprises:

      - means (202) for selecting, in this combined linear attenuation function, a plurality of energy ranges (HE.1, BE, HE.2),
      - means (203) for calculating, in each energy range (HE.1, BE, HE.2), a representative quantity of the combined linear attenuation function,
      - means (204) for estimating on the basis of at least two of these quantities, at least one physical characteristic of the material to be **characterized, by** means of a comparison with the same quantities obtained using known materials.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011009833 A